# EUROPEAN PATENT APPLICATION

(11) **EP 4 835 749 A1**
(43) Date of publication of application: **04.11.2026**
(21) Application number: 26168307.2
(22) Date of filing: 26.03.2026
(51) Int. Cl.: G06N 10/20, G06N 10/40, G06N 10/60, G06N 10/80

(54) **COMPUTER PROGRAM, INFORMATION PROCESSING METHOD, AND INFORMATION PROCESSING APPARATUS**

(30) Priority: 28.04.2025 JP 2025074973
(71) Applicant: Fujitsu Limited, Kawasaki-shi, Kanagawa 211-8588 (JP); QunaSys Inc., Bunkyo-ku Tokyo 113-0001 (JP)
(72) Inventor: KANASUGI, Shota, Kawasaki-shi, 211-8588 (JP); NAKAGAWA, Yuya, Bunkyo-ku, 113-0001 (JP)
(74) Representative: Haseltine Lake Kempner LLP

(57) **Abstract**

A processing unit in an information processing apparatus acquires a Hamiltonian operator. The processing unit determines, for each of a plurality of time evolution operators, the number of sampling runs to be performed in a quantum computing device, based on weights of the plurality of time evolution operators, the Hamiltonian operator being approximated as a linear combination of the plurality of time evolution operators using a finite difference formula.

## Description

### FIELD

The embodiments discussed herein relate to a computer program, an information processing method, and an information processing apparatus.

### BACKGROUND

In fields such as material development and drug discovery, physical property calculations are performed using material physical property calculations and quantum chemical calculations. In such physical property calculations, the memory usage increases exponentially with an increase in the size of a quantum many-body system to be calculated. Therefore, it is difficult to perform the calculations using a classical computer.

It has been proposed to use a quantum computer or a quantum simulator in order to efficiently perform physical property calculations of a quantum many-body system. Hereinafter, a quantum computer or a quantum simulator is referred to as a quantum computing device.

In quantum algorithms for material physical property calculations and quantum chemical calculations, expectation values of Hamiltonian operators or transition amplitudes may be measured using a quantum computing device. Hamiltonian operators are often non-unitary operators. In the case where a Hamiltonian operator is a non-unitary operator, it is not possible to directly measure it using a quantum computing device. Therefore, the Hamiltonian operator may be approximated as a linear combination of a plurality of unitary operators that are measurable by the quantum computing device. As a method for approximating a Hamiltonian operator as a linear combination of unitary operators, there is a method for expressing a Hamiltonian operator as a linear combination of a plurality of Pauli operators. In this method, a quantum circuit corresponding to each Pauli operator is implemented on a quantum computing device. Then, an expectation value or a transition amplitude is measured by performing sampling of the quantum circuit corresponding to each Pauli operator. This method is hereinafter referred to as a Pauli operator decomposition method.

Conventionally, methods for measuring an expectation value and a transition amplitude of a Hamiltonian operator using a classical computer and a quantum computer have been proposed (see, for example, Japanese National Publication of International Patent Application No. 2022-536063, Japanese Laid-open Patent Publication No. 2021-152892, U.S. Patent Application Publication No. 2020/0057957, and U.S. Patent Application Publication No. 2024/0112063) .

In the Pauli operator decomposition method, the number of Pauli operators increases polynomially with the system size of a quantum many-body system. Therefore, there is a problem that, if the scale of the quantum many-body system increases, the sampling cost in the quantum computing device becomes enormous.

### SUMMARY

In one aspect, it is desirable to reduce the sampling cost in a quantum computing device.

In one aspect, there is provided a computer program that causes a computer to perform a process including: acquiring a Hamiltonian operator; and determining, for each of a plurality of time evolution operators, a number of sampling runs to be performed in a quantum computing device, based on weights of the plurality of time evolution operators, the Hamiltonian operator being approximated as a linear combination of the plurality of time evolution operators using a finite difference formula.

### BRIEF DESCRIPTION OF DRAWINGS

Reference is made, by way of example only, to the accompanying drawings in which:
FIG. 1 illustrates an example of an information processing method according to a first embodiment;
FIG. 2 illustrates an example of hardware of a classical computer;
FIG. 3 is a block diagram illustrating an example of functions of the classical computer;
FIG. 4 is a flowchart illustrating an example of a processing procedure of an information processing method according to the second embodiment;
FIG. 5 is a flowchart illustrating an example of a process for determining the number of sampling runs Mⱼ;
FIG. 6 is a flowchart illustrating an example of a thresholding process;
FIG. 7 is a conceptual diagram of a one-dimensional Fermi-Hubbard model;
FIG. 8 illustrates an example of a simulation result of an estimation error of a Hamiltonian matrix;
FIG. 9 illustrates an example of simulation results of estimation accuracy of ground-state energy;
FIG. 10 illustrates an example of simulation results of a relationship between the estimation accuracy of the ground-state energy and the total number of sampling runs; and
FIG. 11 is a flowchart illustrating a processing procedure of a modification of the information processing method.

### DESCRIPTION OF EMBODIMENTS

Hereinafter, embodiments will be described with reference to the drawings. A plurality of embodiments may be combined unless they exclude each other.

As described earlier, the Pauli operator decomposition method is proposed as one of the methods for representing a Hamiltonian operator is. In the Pauli operator decomposition method, a Hamiltonian operator is given by Expression (1). $\hat{H} = {\sum }_{j = 1}^{{N}_{P}} {α}_{j} {\hat{P}}_{j} \left({α}_{j}∈ℝ\right)$ (1)

In Expression (1), H with a hat (indicating an operator) represents a Hamiltonian operator, and Pⱼ with a hat represents a Pauli operator. αⱼ is a real number. N_{P} is the number of Pauli operators (the number of terms).

In the Pauli operator decomposition method, as the scale of a quantum many-body system increases, N_{P} increases polynomially, and the sampling cost (the number of sampling runs and the total amount of computational resources) in a quantum computing device becomes enormous.

In order to avoid this problem, there is a technique for representing a Hamiltonian operator as a time derivative of a time evolution operator (for example, see the following Document 1) .

Document 1: Tatiana A. Bespalova and Oleksandr Kyriienko, "Hamiltonian Operator Approximation for Energy Measurement and Ground-State Preparation", PRX QUANTUM 2, 030318, 2021
A Hamiltonian operator is expressed as a derivative of a time evolution operator by Expression (2). ${\left.\hat{H}=i\frac{d}{dτ}exp\left[-iτ\hat{H}\right]\right|}_{τ = 0}$ (2)

In Expression (2), exp[-τH] (H with a hat on top) is a time evolution operator. Here, by approximating the time derivative using a finite difference formula, for example, Expression (3) is obtained. ${\left.\hat{H}=i\frac{d}{dτ}exp\left[-iτ\hat{H}\right]\right|}_{τ = 0} = \frac{i}{{δ}_{τ}} {\sum }_{j = - m}^{m} {a}_{j}^{\left(2m\right)} exp \left[-i\left(τ+{jδ}_{τ}\right)\hat{H}\right] + O \left({δ}_{τ}^{2 m}\right)$ (3)

In Expression (3), the Hamiltonian operator is approximated using an m-th order central finite difference formula, which is a type of finite difference formula. In Expression (3), δ_{τ} is a difference parameter of the finite difference formula and represents a time discretization step. In Expression (3), O(δ_{τ}^{2m}) represents an error term. In addition, in Expression (3), aⱼ^{(2m)} is a weight for each time evolution operator. aⱼ^{(2m)} is given by Expression (4). ${a}_{j}^{\left(2m\right)} = \left\{\begin{matrix}0 , \left(j=0\right) \\ \frac{{\left(-1\right)}^{j + 1} {\left(m!\right)}^{2}}{j \left(m-j\right) ! \left(m+j\right) !} , \left(j\neq 0\right)\end{matrix}\right.$ (4)

Hereinafter, a technique for approximating a Hamiltonian operator as a linear combination of time evolution operators as described above is referred to as a Hamiltonian operator approximation method. Unlike the Pauli operator decomposition method, the Hamiltonian operator approximation method does not perform measurement for each term of a Pauli operator.

However, there is no guarantee that the sampling cost is reduced by the Hamiltonian operator approximation method. Even in the above-mentioned Document 1, theoretical conditions under which the sampling cost is reduced are not clarified. In the Hamiltonian operator approximation method, the number of quantum gates used increases compared to a normal Pauli operator decomposition method. Therefore, if the sampling cost is not reduced, there is little merit in applying the Hamiltonian operator approximation method. In addition, it is known that the calculation accuracy significantly changes depending on the setting of the parameters (δ_{τ} and m) in Expression (3).

For this reason, in the Hamiltonian operator approximation method, various parameters are empirically fine-tuned in order to minimize the sampling cost. However, guidelines for fine-tuning are not clear. Therefore, a parameter search is empirically performed, and an expectation value and a transition amplitude of a Hamiltonian operator are not efficiently measured.

In view of the above, an information processing method according to a first embodiment is designed to reduce the sampling cost in a quantum computing device by a method described below.

### [First Embodiment]

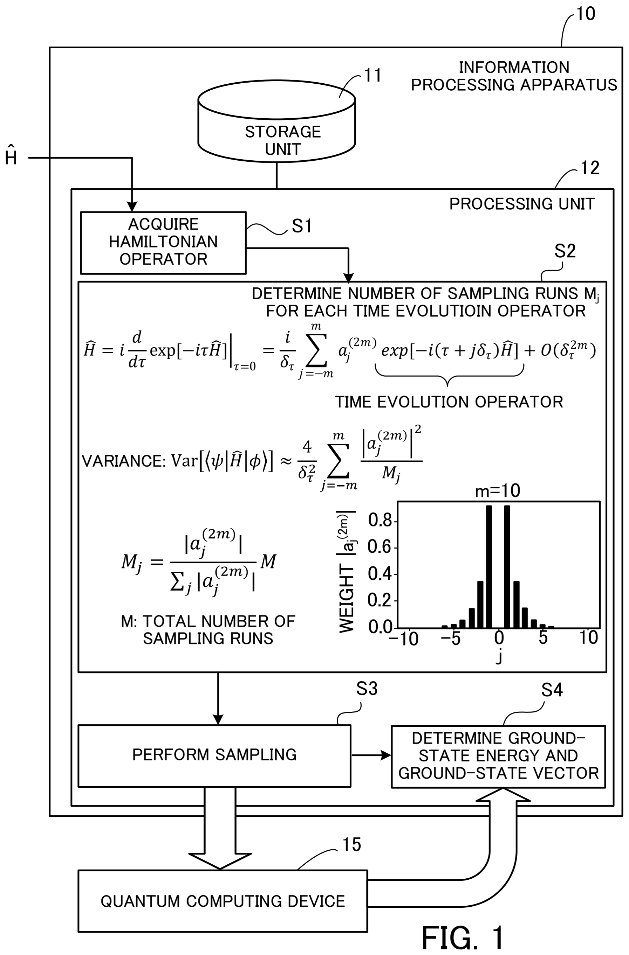

FIG. 1 illustrates an example of the information processing method according to the first embodiment. FIG. 1 illustrates an information processing apparatus 10 that performs an information processing method. The information processing apparatus 10 is able to implement the information processing method by executing a program, for example.

The information processing apparatus 10 includes a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.

The storage unit 11 stores, for example, information on quantum circuits corresponding to respective time evolution operators of a Hamiltonian operator, the Hamiltonian operator being approximated as a linear combination of the plurality of time evolution operators using a finite difference formula. In addition, the storage unit 11 may store calculation conditions (such as a total number of sampling runs, which will be described later).

The processing unit 12 causes a quantum computing device 15 to measure an expectation value or a transition amplitude of the Hamiltonian operator.

The expectation value is expressed as 〈ψ|H|ψ〉 (H with a hat (the same applies hereinafter)) for a certain quantum state |y〉. For example, in a variational quantum eigensolver (VQE), a ground state of a material system or the like is calculated by variationally optimizing an energy expectation value 〈ψ(θ)|H|ψ(θ)〉 measured for a parameterized ansatz state |ψ(θ)〉.

The transition amplitude is expressed as 〈ψ|H|φ〉 for two quantum states |ψ〉 and |φ〉. For example, in quantum subspace expansion (QSE), a subspace Span (|φ₀〉, |φ₁〉, ...)) is used. Then, by solving a generalized eigenvalue equation formed of transition amplitudes 〈φᵢ|φⱼ〉 and 〈φᵢ|H|φⱼ〉 (i, j = 0, 1, ...) measured with respect to the subspace, the ground state of the material system or the like is calculated.

The processing unit 12 reduces the sampling cost by determining the number of sampling runs for each of the plurality of time evolution operators as described below.

Step S1: The processing unit 12 acquires a Hamiltonian operator. The Hamiltonian operator may be input, for example, by a user of the information processing apparatus 10 operating an input device. Alternatively, the information processing apparatus 10 may receive the Hamiltonian operator transmitted from another information processing apparatus via a network.

The Hamiltonian operator acquired by the processing unit 12 may be approximated as a linear combination of a plurality of time evolution operators using a finite difference formula, as in Expression (3), for example. The processing unit 12 may convert the acquired Hamiltonian operator into a Hamiltonian operator approximated as a linear combination of a plurality of time evolution operators using a finite difference formula.

Step S2: The processing unit 12 determines, for each of the plurality of time evolution operators, the number of sampling runs to be performed in the quantum computing device 15, based on the weights of the time evolution operators.

The weight aⱼ^{(2m)} of each of the plurality of time evolution operators is given by Expression (4) described above. FIG. 1 illustrates an example of the absolute value of aⱼ^{(2m)} in the case of m = 10. The horizontal axis represents the index j of the time evolution operator, and the vertical axis represents the absolute value of the weight aⱼ^{(2m)}. As illustrated in FIG. 1, the weight aⱼ^{(2m)} may take different values for different time evolution operators.

The following describes an example in which a transition amplitude given by Expression (5) is estimated using the Hamiltonian operator approximation method. $\left〈ψ\right| \hat{H} \left|ϕ\right〉 \approx \frac{i}{{δ}_{τ}} {\sum }_{j = - m}^{m} {a}_{j}^{\left(2m\right)} \left〈ψ\right| exp \left[-i\left(τ+{jδ}_{τ}\right)\hat{H}\right] \left|ϕ\right〉$ (5)

When the above transition amplitude is estimated, its variance is given by Expression (6). $Var \left[\left〈ψ\right|\hat{H}\left|ϕ\right〉\right] \approx \frac{4}{{δ}_{τ}^{2}} {\sum }_{j = - m}^{m} \frac{{\left|{a}_{j}^{\left(2m\right)}\right|}^{2}}{{M}_{j}}$ (6)

In Expression (6), Mⱼ is the number of sampling runs for each of the 2m+1 time evolution operators from j = -m to j = m. In the case where the total number of sampling runs is M, the relationship between Mⱼ and M is given by Expression (7). ${\sum }_{j = - m}^{m} {M}_{j} \left(1-{δ}_{j , 0}\right) = M$ (7)

The variance corresponds to a statistical error. According to Expression (6), the variance increases as the weight aⱼ^{(2m)} increases, and decreases as the number of sampling runs Mⱼ increases. The processing unit 12 is able to reduce the variance by determining the number of sampling runs Mⱼ for each time evolution operator based on the weight aⱼ^{(2m)}. Specifically, among the plurality of time evolution operators, which includes a first time evolution operator and a second time evolution operator having a larger weight than the first time evolution operator, the processing unit 12 determines a larger number of sampling runs for the second time evolution operator than for the first time evolution operator. By doing so, the number of sampling runs Mⱼ for each time evolution operator is made non-uniform according to the weight aⱼ^{(2m)}.

The number of sampling runs Mⱼ for each time evolution operator based on the weight aⱼ^{(2m)} is given by, for example, Expression (8). ${M}_{j} = \frac{\left|{a}_{j}^{\left(2m\right)}\right|}{{\sum }_{j} \left|{a}_{j}^{\left(2m\right)}\right|} M$ (8)

In the case where the expectation value of the Hamiltonian operator is estimated using the Hamiltonian operator approximation method, for example, φ in Expression (5) and Expression (6) may be replaced with ψ. Also in this case, the number of sampling runs Mⱼ is determined by Expression (8).

In this connection, a method for determining the order m and the difference parameter δ_{τ}, which are parameters of the finite difference formula, will be described in a second embodiment.

Step S3: The processing unit 12 causes the quantum computing device 15 to perform sampling according to the number of sampling runs Mⱼ determined for each of the plurality of time evolution operators. A quantum circuit corresponding to each of the plurality of time evolution operators is implemented in the quantum computing device 15. Then, the sampling of each quantum circuit is performed according to the number of sampling runs Mⱼ. Information on each quantum circuit is read from the storage unit 11 and transmitted to the quantum computing device 15, for example.

The processing unit 12 causes the quantum computing device 15 to measure matrix elements H_{j,k} and S_{j,k} given in Expression (9) through the sampling. ${H}_{j , k} = \left〈{ϕ}_{j}\right| \hat{H} \left|{ϕ}_{k}\right〉 , {S}_{j , k} = \left〈{ϕ}_{j}\left|{ϕ}_{k}\right.\right〉$ (9)

The quantum computing device 15 is a quantum computer or a quantum simulator. As the quantum computer, various types of quantum computers such as a superconducting type, a diamond spin type, and a trapped-ion type may be applied. The quantum simulator may be implemented by a classical computer (von Neumann computer) . The information processing apparatus 10 may implement the quantum simulator.

The quantum computing device 15 performs desired quantum computation by manipulating the states of qubits based on quantum circuits representing a plurality of time evolution operators. In implementing the quantum circuits, a Trotter decomposition method that decomposes each time evolution operator into a product of a plurality of Hamiltonians may also be applied.

Step S4: The processing unit 12 determines a ground-state energy and a ground-state vector based on the sampling results of the matrix elements given in Expression (9), the sampling results being obtained by the quantum computing device 15. The processing unit 12 determines the ground-state energy and the ground-state vector by solving a generalized eigenvalue equation given by Expression (10) based on the sampling results. $Hv = E Sv$ (10)

Among the eigenvalues E in Expression (10), the minimum eigenvalue E₀ is an approximate value of the ground-state energy. Among the eigenvectors v in Expression (10), an eigenvector v₀ corresponding to the minimum eigenvalue E₀ is the ground-state vector.

As described above, in the information processing method according to the first embodiment, the processing unit 12 determines the number of sampling runs Mⱼ for each time evolution operator on the basis of the weight aⱼ^{(2m)}, so that the variance is reduced. Since the variance corresponds to a statistical error, the reduction in the variance also reduces the statistical error. This makes it possible to suppress deterioration in estimation accuracy even when the total number of sampling runs is reduced, and thus it is possible to reduce the sampling cost in the quantum computing device 15.

Since the sampling cost in the quantum computing device 15 is reduced, for example, more efficient simulation for a quantum many-body system is expected in the fields of material development, drug discovery, and others.

### [Second Embodiment]

An information processing method according to a second embodiment relates to a method in which a classical computer causes a quantum computer to measure an expectation value or a transition amplitude of a Hamiltonian operator. A quantum simulator may be used instead of the quantum computer.

### (Hardware Example)

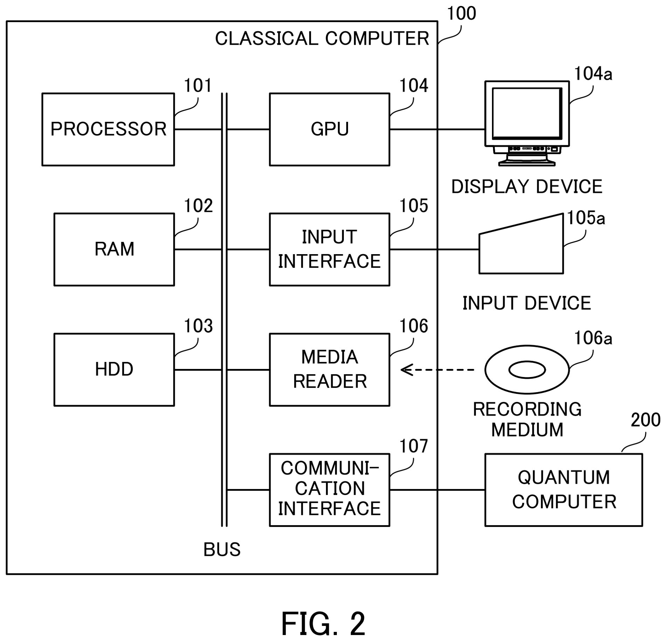

FIG. 2 illustrates an example of hardware of a classical computer. A classical computer 100 causes a quantum computer 200 to measure an expectation value or a transition amplitude of a Hamiltonian operator. The classical computer 100 may be a client device or a server device.

The classical computer 100 includes a processor 101, a random access memory (RAM) 102, a hard disk drive (HDD) 103, a graphics processing unit (GPU) 104, an input interface 105, a media reader 106, and a communication interface 107, which are connected to a bus. The processor 101 corresponds to the processing unit 12 of the first embodiment. The RAM 102 or the HDD 103 corresponds to the storage unit 11 of the first embodiment.

The processor 101 is a processor including an arithmetic circuit that executes program instructions, such as a GPU or a central processing unit (CPU). The processor 101 loads at least a part of a program and data from the HDD 103 into the RAM 102 and executes the program.

The processor 101 may include a plurality of processor cores. The classical computer 100 may include a plurality of processors. A processor that performs one process among a plurality of processes performed by the classical computer 100 may be different from a processor that executes another process among the plurality of processes. The processor may be referred to as processor circuitry. A set of a plurality of processors (multiprocessor) may be referred to as a "processor".

The RAM 102 is a volatile semiconductor memory that temporarily stores a program to be executed by the processor 101 and data to be used by the processor 101 during its operation. The classical computer 100 may have a type of volatile memory other than RAM.

The HDD 103 is a non-volatile storage device that stores software programs such as an operating system (OS), middleware, and application software, and data. The classical computer 100 may include another type of non-volatile storage device such as a flash memory or a solid state drive (SSD).

The GPU 104 performs image processing in cooperation with the processor 101, and outputs images to a display device 104a connected to the classical computer 100. The display device 104a is, for example, a cathode ray tube (CRT) display, a liquid crystal display, an organic electro luminescence (EL) display, or a projector. Other types of output devices such as a printer may be connected to the classical computer 100.

The GPU 104 may be used as a general purpose computing on graphics processing unit (GPGPU). The GPU 104 is able to execute a program in response to an instruction from the processor 101. The classical computer 100 may include a volatile semiconductor memory other than the RAM 102 as a GPU memory.

The input interface 105 receives an input signal from an input device 105a connected to the classical computer 100. The input device 105a is, for example, a mouse, a touch panel, or a keyboard. A plurality of input devices may be connected to the classical computer 100.

The media reader 106 is a reading device that reads a program and data recorded on a recording medium 106a. The recording medium 106a is, for example, a magnetic disk, an optical disc, or a semiconductor memory. Magnetic disks include a flexible disk (FD) and an HDD. Optical discs include a compact disc (CD) and a digital versatile disc (DVD). The media reader 106 copies a program and data read from the recording medium 106a to another storage medium such as the RAM 102 or the HDD 103. The read program may be executed by the processor 101.

The recording medium 106a may be a portable storage medium. The recording medium 106a may be used for distribution of programs and data. The recording medium 106a and the HDD 103 may be referred to as computer-readable storage media.

The communication interface 107 is connected to the quantum computer 200 via a network. The communication interface 107 transmits information such as quantum circuit information and a sampling request to the quantum computer 200, and receives information indicating a sampling result from the quantum computer 200. The communication interface 107 is, for example, a wired communication interface connected to a wired communication device such as a switch or a router by a cable.

With the hardware as described above, the classical computer 100 is able to implement the processing functions of the second embodiment. The information processing apparatus 10 described in the first embodiment may also be implemented with hardware similar to that of the classical computer 100 illustrated in FIG. 2.

The classical computer 100 implements the processing functions of the information processing method according to the second embodiment by executing a program recorded on a computer-readable storage medium, for example. The program describing the processing contents to be executed by the classical computer 100 may be recorded on various storage media. For example, a program to be executed by the classical computer 100 may be stored in the HDD 103. The processor 101 loads at least a part of the program from the HDD 103 into the RAM 102 and executes the program. The program to be executed by the classical computer 100 may be recorded on a portable storage medium. The program stored in the portable storage medium becomes executable after being installed in the HDD 103 under the control of the processor 101, for example. Alternatively, the processor 101 may read the program directly from the portable storage medium and execute the program.

The quantum computer 200 performs measurement of an expectation value or a transition amplitude of a Hamiltonian operator by performing sampling of implemented quantum circuits. As the quantum computer 200, various types of quantum computers such as a superconducting type, a diamond spin type, and a trapped-ion type may be applied.

### (Examples of Functional Blocks)

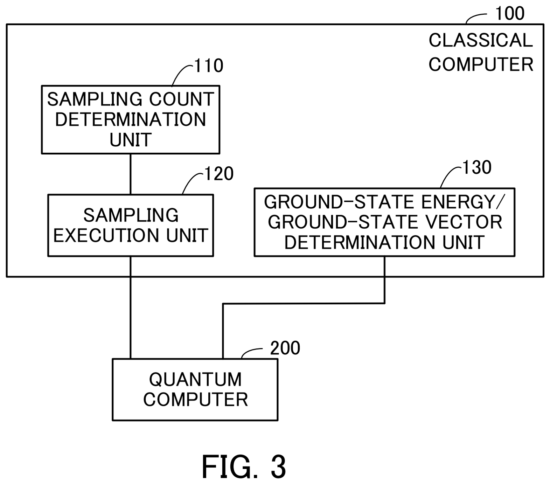

FIG. 3 is a block diagram illustrating an example of functions of the classical computer. The classical computer 100 includes a sampling count determination unit 110, a sampling execution unit 120, and a ground-state energy/ground-state vector determination unit 130.

The sampling count determination unit 110 acquires a Hamiltonian operator to be measured. The Hamiltonian operator is approximated as a linear combination of a plurality of time evolution operators using a finite difference formula, and the sampling count determination unit 110 determines the number of sampling runs for each of the plurality of time evolution operators. A specific example of a method for determining the number of sampling runs will be described later.

The sampling execution unit 120 causes the quantum computer 200 to perform sampling according to the number of sampling runs determined for each of the plurality of time evolution operators. The sampling execution unit 120 causes the quantum computer 200 to measure the matrix elements H_{j,k} and S_{j,k} given in Expression (9) through the sampling.

The ground-state energy/ground-state vector determination unit 130 determines a ground-state energy and a ground-state vector based on the sampling results of the matrix elements H_{j,k} and S_{j,k}. The ground-state energy/ground-state vector determination unit 130 determines the ground-state energy and the ground-state vector by solving a generalized eigenvalue equation given by Expression (10) based on the sampling results.

In this connection, the function of each element illustrated in FIG. 3 may be implemented by causing the processor 101 to execute a program module corresponding to that element, for example.

### (Method for Determining Number of sampling runs and Parameter Values)

The sampling count determination unit 110 determines, for each of a plurality of time evolution operators obtained by approximating a Hamiltonian operator using the Hamiltonian operator approximation method, the number of sampling runs based on the weights of the plurality of time evolution operators. The Hamiltonian operator approximation method approximates the Hamiltonian operator as a linear combination of the plurality of time evolution operators using a finite difference formula as given in Expression (3). The sampling count determination unit 110 sets a distribution (hereinafter, referred to as a sampling distribution) of the numbers of samples Mⱼ determined for the respective time evolution operators according to Expression (8).

By making the sampling distribution for the time evolution operators non-uniform in this manner, for example, the variance given by Expression (6) is reduced. Since the variance corresponds to a statistical error, the reduction in the variance also reduces the statistical error.

The following describes an example of a method for determining parameter values to determine the number of sampling runs that further reduces the sum of the statistical error and an error due to the finite difference approximation method. The parameters of the finite difference formula include a difference parameter δ_{τ} and an order m.

A statistical error εₛₜₐₜ that occurs under the sampling distribution according to Expression (8) is expressed as εₛₜₐₜ = αₘδ_{τ}⁻¹. That is, the statistical error εₛₜₐₜ is proportional to the reciprocal of the difference parameter δ_{τ}.

On the other hand, an approximation error of the finite difference approximation method (hereinafter, referred to as a finite difference error) ε_{fd} is expressed as ε_{fd} = βₘδ_{τ}^{2m}. That is, the value of the finite difference error ε_{fd} increases as the difference parameter δ_{τ} increases or as the order m decreases. Here, the difference parameter δ_{τ} is generally a small quantity less than 1.

Note that αₘ and βₘ are constants (> 0) that depend on the order m, the Hamiltonian operator, and the applied quantum algorithm.

The sum of the statistical error and the finite difference error (hereinafter, referred to as an estimation error) ε is expressed as ε = εₛₜₐₜ + βₘδ_{τ}^{2m} = αₘδ_{τ}⁻¹ + βₘδ_{τ}^{2m}. The sampling count determination unit 110 determines the difference parameter δ_{τ} and the order m based on the estimation error ε. This makes it possible to reduce the estimation error ε. For example, the difference parameter δ_{τ} that minimizes the estimation error ε is given by Expression (11). ${δ}_{τ} = {\left(\frac{{α}_{m}}{2 {mβ}_{m}}\right)}^{1 / \left(2m+1\right)}$ (11)

Using the difference parameter δ_{τ} given by Expression (11), the order m is set to a sufficiently large value such that the estimation error ε becomes smaller than that of a measurement method to be compared (for example, a Pauli operator decomposition method) .

Hereinafter, a method for determining the difference parameter δ_{τ} and the order m in the case where Krylov quantum diagonalization (hereinafter, abbreviated as KQD), which is a type of quantum algorithm, is applied will be described as an example.

KQD is a quantum algorithm that performs the aforementioned QSE in a Krylov subspace. The Krylov subspace is given by Expression (12). ${K}_{n} = Span \left(\left|{ϕ}_{0}\right〉, \left|{ϕ}_{1}\right〉, ⋯, \left|{ϕ}_{n - 1}\right〉\right)$ (12)

In Expression (12), a certain state vector |φₖ〉 is given by Expression (13). $\left|{ϕ}_{k}\right〉 = exp \left(-ikτ\hat{H}\right) \left|{ϕ}_{0}\right〉$ (13)

Such a Krylov subspace is also referred to as a real-time evolution Krylov subspace.

Among the matrix elements H_{k,l} and S_{k,l} to be measured, which are given by Expression (14), H_{k,l} is calculated by the Hamiltonian operator approximation method. ${H}_{k , l} = \left〈{ϕ}_{k}\left|\hat{H}\right|{ϕ}_{l}\right〉 , {S}_{k , l} = \left〈{ϕ}_{k}\left|{ϕ}_{l}\right.\right〉$ (14)

In the Hamiltonian operator approximation method for KQD, the matrix element H_{k,l} is approximated as given by Expression (15) . $\left〈{ϕ}_{k}\left|\hat{H}\right|{ϕ}_{l}\right〉 \approx \frac{i}{{δ}_{τ}} {\sum }_{j = - m}^{m} {a}_{j}^{\left(2m\right)} \left〈{ϕ}_{0}\left|\hat{U}{\left(τ\right)}^{l - k}{\hat{U}}_{fd}\left({jδ}_{τ}\right)\right|{ϕ}_{0}\right〉$ (15)

In Expression (15), a portion 〈φ₀|U(τ)^{l-k}U_{fd}(jδ_{τ})|φ₀〉 (U with a hat (the same applies hereinafter)) is a portion to be measured by the quantum computer 200. U(τ) is an approximation circuit for a time evolution operator, which is given by Expression (16). U_{fd}(jδ_{τ}) is an approximation circuit for a time evolution operator, which is given by Expression (17). $\hat{U} \left(τ\right) \approx exp \left(-iτ\hat{H}\right)$ (16) ${\hat{U}}_{fd} \left({jδ}_{τ}\right) \approx exp \left(-{ijδ}_{τ}\hat{H}\right)$ (17)

In Expression (16), exp(-iτH) (H with a hat (the same applies hereinafter)) is implemented as a quantum circuit (a combination of quantum gates) for a time evolution operator at time T.

In Expression (17), exp(-ijδ_{τ}H) is implemented as a quantum circuit (a combination of quantum gates) for a time evolution operator at a difference time jδ_{τ}. In order to maintain the hermiticity, U_{fd}(-jδ_{τ}) = U_{fd}(jδ_{τ})^{†}.

Since 〈φₖ|H|φₗ〉 = 〈φ₀|Hlφₗ₋ₖ〉, the quantum computer 200 only needs to measure 〈φ₀|U(ττ)^{k}U_{fd}(jδ_{τ})|φ₀〉 (k = 0, 1, ..., n - 1).

The sampling count determination unit 110 determines the number of sampling runs Mⱼ^{(k)} for such a transition amplitude (which may also be referred to as an expectation value) using Expression (18). ${M}_{j}^{\left(k\right)} = \frac{\left|{a}_{j}^{\left(2m\right)}\right|}{{\sum }_{j} \left|{a}_{j}^{\left(2m\right)}\right|} {M}^{\left(k\right)}$ (18)

In Expression (18), k = 0, 1, ..., n - 1, and j = -m, -m + 1, ..., m. In addition, in the case where the total number of sampling runs is determined to be M, M^{(k)} in Expression (18) is given by Expression (19) (see, for example, the following Document 2). ${M}^{\left(k\right)} = \frac{{α}_{k} M}{\sqrt{2} \left(n-1\right) + 1} , {α}_{k} = \left\{\begin{matrix}1 , k = 0 \\ \sqrt{2} , k \neq 0\end{matrix}\right.$ (19)

Document 2: Lee et all., "Sampling Error Analysis in Quantum Krylov Subspace Diagonalization", Quantum 8, 1477 (2024)
A statistical error for a Hamiltonian matrix, which occurs under the distribution (sampling distribution) of the number of sampling runs Mⱼ^{(k)}, is given by Expression (20). $\left‖H-{H}^{˜}\right‖ \leq \frac{2 \left(log\left(m\right)+1\right) m \sqrt{2 log \left(2n\right)}}{{δ}_{τ} \sqrt{M}}$ (20)

In Expression (20), H is an exact value (without noise) of the Hamiltonian matrix. H with a tilde is an approximate value of the Hamiltonian matrix (with a statistical error due to sampling according to the above sampling distribution).

The estimation error of the entire Hamiltonian matrix, including the finite difference error, is given by Expression (21). $\left‖H-{H}^{˜}\right‖ \leq \frac{2 \left(log\left(m\right)+1\right) n \sqrt{2 log \left(2n\right)}}{{δ}_{τ} \sqrt{M}} + {ne}^{- \frac{m}{2}} {\left‖\hat{H}\right‖}_{K}^{2 m + 1} {δ}_{τ}^{2 m} = : {η}_{H}$ (21)

The difference parameter δ_{τ} that minimizes the error bound η_{H} in Expression (21) is given by Expression (22). ${δ}_{τ} = {\left(\frac{\left(log\left(m\right)+1\right) \sqrt{2 log \left(2n\right)}}{{me}^{- \frac{m}{2}} {\left‖\hat{H}\right‖}_{K}^{2 m + 1} \sqrt{M}}\right)}^{\frac{1}{2 m + 1}} = O \left({\left‖\hat{H}\right‖}_{K}^{- 1}\right) \left(m≫1\right)$ (22)

In Expression (22), ||H||_{K} represents a spectral norm in the Krylov subspace.

The sampling count determination unit 110 sets the order m to satisfy the condition of Expression (23), which is defined using the small-o notation (where o(x) denotes a function of an order smaller than x), such that the estimation error becomes smaller than that of the Pauli operator decomposition method. $m = exp \left(o\left(\frac{{\left‖\hat{H}\right‖}_{1}}{{\left‖\hat{H}\right‖}_{K}}\right)\right)$ (23)

In Expression (23), ||H||₁ denotes the L1 norm of the Hamiltonian operator.

Note that the estimation error in the case of applying the Pauli operator decomposition method is given by Expression (24). $\left‖H-{H}^{˜}\right‖ \leq \frac{2 {\left‖\hat{H}\right‖}_{1} n \sqrt{2 log \left(2n\right)}}{{δ}_{τ} \sqrt{M}}$ (24)

### (Processing Procedure for Information Processing Method of Second Embodiment in the case where KQD Algorithm is Applied)

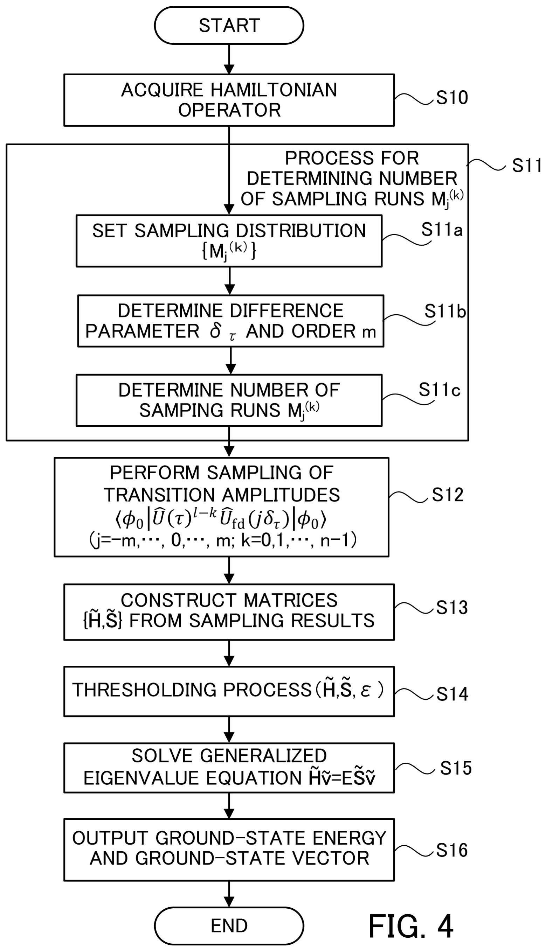

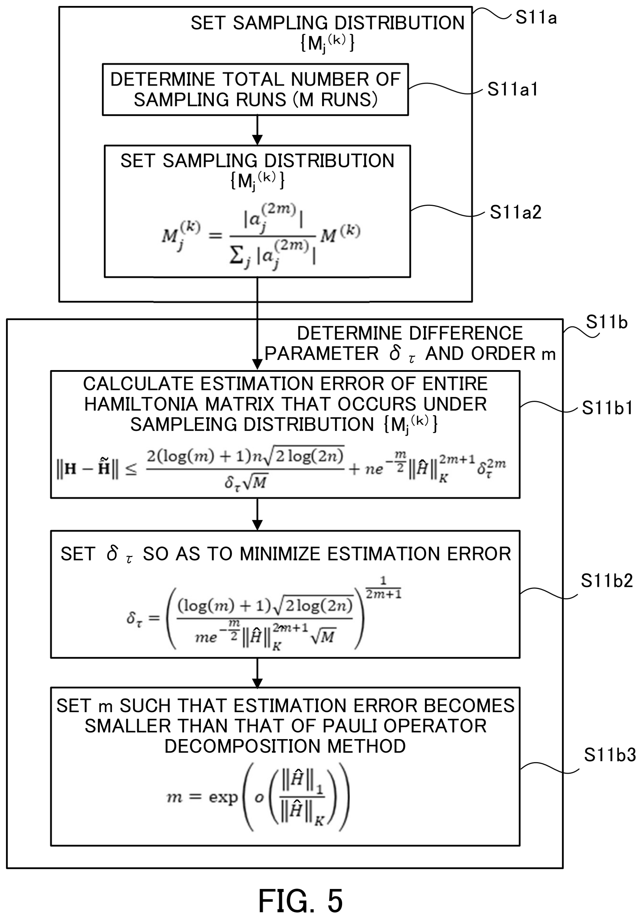

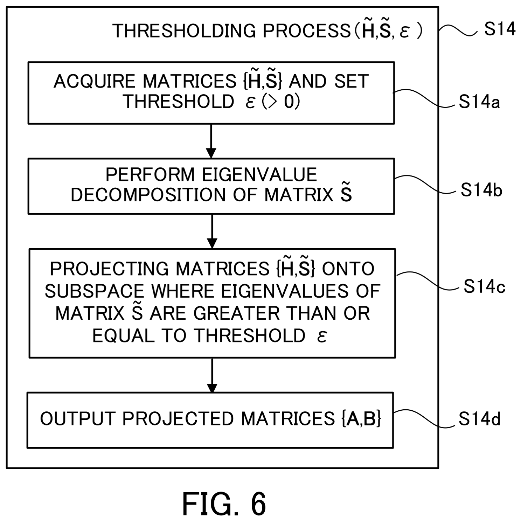

FIG. 4 is a flowchart illustrating an example of a processing procedure of the information processing method according to the second embodiment. FIG. 5 is a flowchart illustrating an example of a process for determining the number of sampling runs Mⱼ. FIG. 6 is a flowchart illustrating an example of a thresholding process.

Step S10: The classical computer 100 acquires a Hamiltonian operator. The Hamiltonian operator may be input by the user of the classical computer 100 operating the input device 105a, for example. Alternatively, the classical computer 100 may receive the Hamiltonian operator transmitted from another classical computer via a network.

Step S11: The classical computer 100 determines the number of sampling runs Mⱼ^{(k)}. The process for determining the number of sampling runs Mⱼ^{(k)} includes the following steps.

Step S11a: The classical computer 100 sets a distribution (sampling distribution {Mⱼ^{(k)}}) of the number of sampling runs Mⱼ^{(k)}.

As illustrated in FIG. 5, step S11a includes a process for determining the total number of sampling runs (M) (step S11a1). The classical computer 100 may set M to a value input by the user operating the input device 105a, or may set M to a value received via a network. The value of M may be acquired as a calculation condition and may be stored in the HDD 103 or the like. The classical computer 100 may determine a plurality of values regarding the total number of sampling runs.

Step S11a also includes a process for setting the sampling distribution {Mⱼ^{(k)}} according to Expression (18) and Expression (19) (step S11a2). Thus, the sampling distribution for the time evolution operators is made non-uniform according to the weight aⱼ^{(2m)}. For this reason, for example, the variance given by Expression (6) is reduced. Since the variance corresponds to a statistical error, the reduction in the variance also reduces the statistical error.

Step S11b: The classical computer 100 determines a difference parameter δ_{τ} and an order m, which are parameters of the finite difference formula. As illustrated in FIG. 5, step S11b includes a process for calculating an estimation error of the entire Hamiltonian matrix that occurs under the sampling distribution {Mⱼ^{(k)}} (step S11b1). The estimation error is calculated according to Expression (21). Step S11b also includes a process for setting the difference parameter δ_{τ} so as to minimize the estimation error (step S11b2). The difference parameter δ_{τ} that minimizes the estimation error is given by Expression (22), which minimizes the error bound η_{H} appearing on the right-hand side of Expression (21). Step S11b also includes a process for setting the order m such that the estimation error becomes smaller than that of the Pauli operator decomposition method (step S11b3). The order m is set to satisfy the condition of Expression (23), which is defined using the small-o notation.

Step S11c: The classical computer 100 determines the number of sampling runs Mⱼ^{(k)} for each of the plurality of time evolution operators using the weight aⱼ^{(2m)} obtained based on the determined order m. The weight aⱼ^{(2m)} is obtained by calculating Expression (4) based on the order m. The number of sampling runs Mⱼ^{(k)} is determined by calculating Expression (19) using the weight aⱼ^{(2m)}.

Step S12: The classical computer 100 causes the quantum computer 200 to perform sampling of transition amplitudes according to the determined number of sampling runs Mⱼ^{(k)}. For example, sampling of a portion 〈φ₀|U(τ)^{l-k}U_{fd}(jδ_{τ})|φ₀〉 (U with a hat, omitted here) in Expression (15) is performed. This portion is implemented as a quantum circuit (a combination of quantum gates) representing a time evolution operator.

Step S13: The classical computer 100 constructs matrices {H, S} including approximate values of the matrix elements H_{k,l} and S_{k,l} to be measured, which are given by Expression (14), from the sampling results acquired from the quantum computer 200. In FIG. 4, H and S of the matrices {H, S} are each marked with a tilde indicating an approximate value, but the tilde is omitted in the following description.

Step S14: The classical computer performs a thresholding process using the matrices {H, S} and a threshold ε. A general eigenvalue equation of the KQD algorithm tends to be numerically unstable. In order to alleviate the numerical instability, the thresholding process may be performed (see, for example, Document 3).

Document 3: Ethan N. Epperly et al., "A THEORY OF QUANTUM SUBSPACE DIAGONALIZATION", SIAM Journal on Matrix Analysis and Applications 43, 3, 2022
As illustrated in FIG. 6, the thresholding process of step S14 includes a process for acquiring the matrices {H, S} and setting the threshold ε (> 0) (step S14a). Whether the thresholding process is successful depends on how the threshold ε (> 0) is selected. Theoretically, it is known that the threshold ε (> 0) may be set to satisfy ε = O(η) with respect to the error η (which is given by Expression (25)) of the matrices {H, S}. $η = \sqrt{\left‖{Δ}_{S}\right‖ + \left‖{Δ}_{H}\right‖}$ (25)

Further, as illustrated in FIG. 6, the thresholding process of step S14 includes a process for performing eigenvalue decomposition of the matrix S (step S14b). The eigenvalue decomposition of the matrix S is given by Expression (26). ${S}^{˜} = {VΛV}^{†} , Λ = diag \left({σ}_{0}, {σ}_{1}, ⋯, {σ}_{n - 1}\right)$ (26)

Still further, as illustrated in FIG. 6, the thresholding process of step S14 includes a process for projecting the matrices {H, S} onto a subspace where the eigenvalues of the matrix S are greater than or equal to the threshold ε (step S14c). Step S14c is executed according to Expression (27). $A = {V}_{> ϵ}^{†} {S}^{˜} {V}_{> ϵ} , B = {V}_{> ϵ}^{†} {H}^{˜} {V}_{> ϵ}$ (27)

In Expression (27), V_{>ε} is a vector obtained by extracting only eigenvalue components greater than or equal to the threshold ε among the eigenvectors V.

Furthermore, as illustrated in FIG. 6, the thresholding process of step S14 also includes a process for outputting the projected matrices {A, B} (step S14d).

Step S15: The classical computer 100 solves a generalized eigenvalue equation given by Expression (28) based on the matrices {H, S}. ${H}^{˜} {v}^{˜} = {E}^{˜} {S}^{˜} {v}^{˜}$ (28)

The minimum eigenvalue E₀ among the eigenvalues E (marked with a tilde indicating an approximate value) in Expression (28) is an approximate value of the ground-state energy. An eigenvector v₀ corresponding to the minimum eigenvalue E₀ among the eigenvectors v (marked with a tilde indicating an approximate value) in Expression (10) is the ground-state vector.

In the case where the matrices {A, B} projected by the thresholding process are output, a generalized eigenvalue equation is solved using the matrices {A, B} instead of the matrices {H, S}.

Step S16: The classical computer 100 outputs the ground-state energy and the ground-state vector obtained by solving the generalized eigenvalue equation, and completes the process. The classical computer 100 may display the ground-state energy and the ground-state vector on the display device 104a. The classical computer 100 may transmit the ground-state energy and the ground-state vector to another classical computer via a network.

Thus, the process of the classical computer 100 is completed.

### (Simulation Example)

The following describes a simulation example in which the information processing method of the second embodiment is applied to a ground-state calculation of a one-dimensional Fermi-Hubbard model using the KQD algorithm. In this simulation, a quantum simulator is used instead of the quantum computer 200.

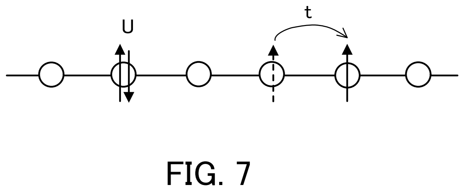

FIG. 7 is a conceptual diagram of the one-dimensional Fermi-Hubbard model.

The one-dimensional Fermi-Hubbard model is a theoretical model that describes the behavior of a solid-state electronic system having a strong electronic correlation. Circles represent sites (lattice points) where electrons are able to exist. Upward arrows indicate spin-up electrons, and downward arrows indicate spin-down electrons.

U is an electron correlation parameter denoting the Coulomb repulsion energy generated when spin-up and spin-down electrons coexist at the same lattice point. Here, t is a hopping parameter denoting the energy for an electron to move to an adjacent lattice point.

A Hamiltonian operator in the one-dimensional Fermi-Hubbard model is given by Expression (29). $\hat{H} = - t {\sum }_{i = 1}^{L} {\sum }_{σ = ↑ , ↓} \left({\hat{c}}_{i , σ}^{†}{\hat{c}}_{i + 1 , σ}+h.c.\right) + U {\sum }_{i = 1}^{L} {\hat{c}}_{i , ↑}^{†} {\hat{c}}_{i , ↑} {\hat{c}}_{i , ↓}^{†} {\hat{c}}_{i , ↓}$ (29)

c_{iσ} is an annihilation operator for an electron at site i with spin σ. c^{†}_{iσ} is a creation operator for an electron at site i with spin σ. Note that in Expression (29), c_{iσ} and c^{†}_{iσ} are each with a hat indicating an operator. L is the number of sites.

In this example, the simulation is performed under the conditions of L = 6 (the number of qubits = 12), U = 5, t = 1, and the number of electrons = 2 (1/6-filling (filling: the average number of electrons per site)). Also, a quantum circuit representing a time evolution operator is implemented using a fourth-order Trotter decomposition method. Furthermore, the simulation is performed as a finite sampling simulation of a noiseless quantum circuit. In the sampling simulation, calculations are executed for 100 patterns of different random number seeds.

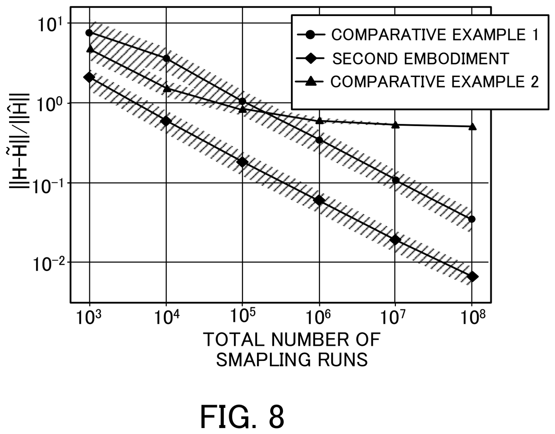

FIG. 8 illustrates an example of a simulation result of an estimation error of a Hamiltonian matrix. The horizontal axis represents the total number of sampling runs, and the vertical axis, given by Expression (30), represents the estimation error. $\left‖H-{H}^{˜}\right‖ / \left‖\hat{H}\right‖$ (30)

In FIG. 8, calculation accuracy is compared between the information processing method of the second embodiment and the calculation methods of Comparative Examples 1 and 2. Comparative Example 1 is a calculation method using a Pauli operator decomposition method. Comparison Example 2 is a calculation method that uses a Hamiltonian operator approximation method similarly to the information processing method of the second embodiment but uses a uniform number of sampling runs for each time evolution operator.

In Comparative Example 2, the difference parameter δ_{τ} and the order m are set to the same values as those in the information processing method of the second embodiment. The order m is set to m = 10. Further, in FIG. 8, shaded areas represent variation (standard deviation).

The information processing method of the second embodiment is compared with Comparative Example 1 under the same accuracy (estimation error). In this case, the information processing method of the second embodiment is able to reduce the total number of sampling runs by approximately 1/100 to 1/10 compared to Comparative Example 1.

In Comparative Example 2, unlike the information processing method of the second embodiment, the estimation error does not decrease much even if the number of sampling runs is increased. Therefore, Comparative Example 2 fails to reduce the number of sampling runs compared to Comparative Example 1.

From the above, it is understood that the information processing method according to the second embodiment is able to estimate a Hamiltonian matrix at a lower sampling cost than Comparative Example 1 and Comparative Example 2.

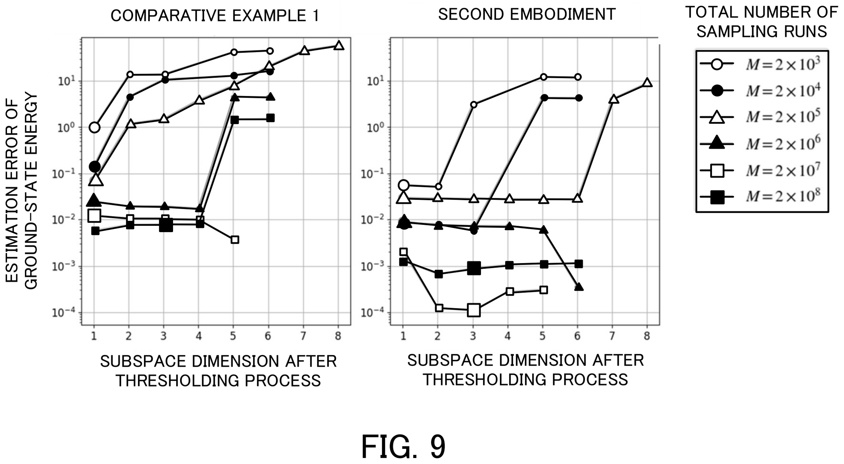

FIG. 9 illustrates an example of simulation results of estimation accuracy of ground-state energy. In FIG. 9, the estimation accuracy of the ground-state energy is compared between the information processing method of the second embodiment and Comparative Example 1. The horizontal axis represents a subspace dimension after the thresholding process, and the vertical axis represents an estimation error of the ground-state energy.

In this connection, the simulation was performed using six different values for the total number of sampling runs. In FIG. 9, plots larger than other plots represent ground-state energies calculated through the thresholding process in which the threshold ε is set to the error η of Expression (25).

As seen in FIG. 9, the information processing method of the second embodiment obtains the ground-state energies with approximately one order of magnitude better accuracy than Comparative Example 1.

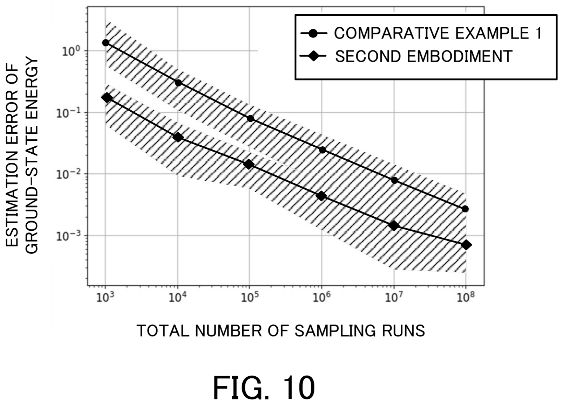

FIG. 10 illustrates an example of simulation results of a relationship between the estimation accuracy of the ground-state energy and the total number of sampling runs. In FIG. 10, the estimation accuracy of the ground-state energy is compared between the information processing method of the second embodiment and Comparative Example 1. The horizontal axis represents the total number of sampling runs, and the vertical axis represents the estimation error of the ground-state energy. Each plot represents a ground-state energy calculated through the thresholding process in which the threshold ε is set to the error η of Expression (25).

As seen in FIG. 10, the information processing method of the second embodiment obtains the ground-state energies with approximately one order of magnitude better accuracy than Comparative Example 1 for all numbers of samples.

As described above, the information processing method of the second embodiment makes it possible to suppress deterioration in estimation accuracy even when the number of sampling runs is reduced. Therefore, the sampling cost in the quantum computer 200 is reduced.

In addition, since the difference parameter δ_{τ} and the order m are determined non-empirically, calculation efficiency is improved.

### (Modification)

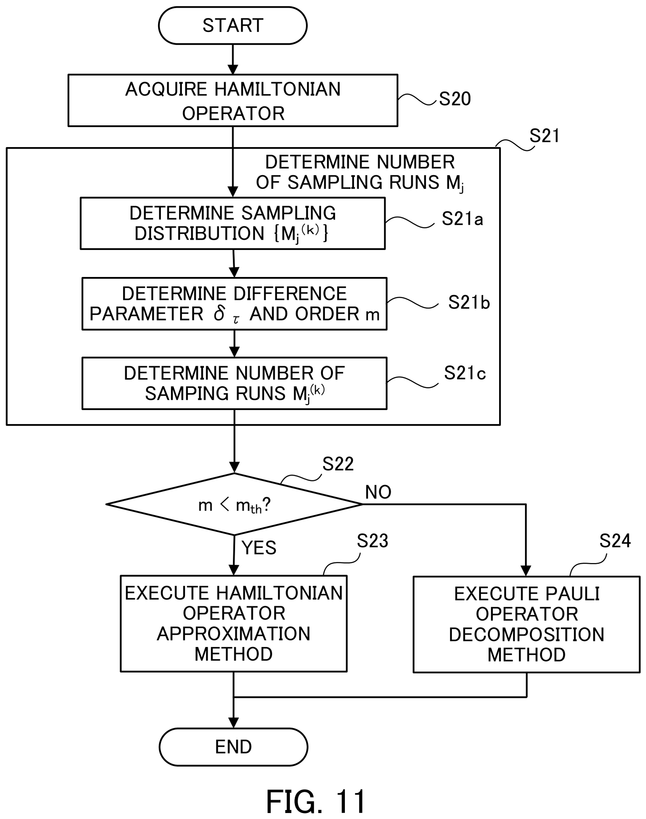

FIG. 11 is a flowchart illustrating a processing procedure of a modification of the information processing method. Steps S20 and S21 (including steps S21a to S21c) are the same as steps S10 and S11 illustrated in FIG. 4.

Step S22: The classical computer 100 determines whether m < mₜₕ. Here, mₜₕ is a predetermined threshold for the order m. mₜₕ is determined based on the maximum depth of a quantum circuit that is implementable in a quantum computer used. In general, the depth of a quantum circuit used for measurement increases with O(m). If determining that m < mₜₕ, the classical computer 100 executes step S23. If determining that m < mₜₕ is not satisfied, the classical computer 100 executes step S24.

Step S23: The classical computer 100 executes a Hamiltonian operator approximation method. The Hamiltonian operator approximation method includes steps S12 to S16 illustrated in FIG. 4.

Step S24: The classical computer 100 executes a Pauli operator decomposition method. In the Pauli operator decomposition method, a Hamiltonian operator is given by Expression (1). That is, the Hamiltonian operator is expressed as a linear combination of a plurality of Pauli operators measurable by the quantum computer 200. Then, the classical computer 100 causes the quantum computer 200 to perform sampling of quantum circuits corresponding to the plurality of Pauli operators.

In the case where the KQD algorithm is used to measure transition amplitudes, sampling of 〈φ₀|U(τ)^{l-k}Pⱼ|φ₀〉 (U and P each with a hat, omitted here) is performed. Here, j = 1, ..., Nₚ (Nₚ is the number of terms of the Pauli operator), and k = 0, 1, ..., n - 1.

Then, the classical computer 100 constructs matrices {H, S} including approximate values of the matrix elements H_{k,l} and S_{k,l} to be measured, which are given by Expression (14), from the sampling results acquired from the quantum computer 200. In addition, the classical computer 100 obtains a ground-state energy and a ground-state vector by solving the generalized eigenvalue equation given by Expression (28) based on the matrices {H, S}.

After steps S23 and S24 are completed, the process of the classical computer 100 is completed.

According to the above process, in the case where the order m determined in step S21b is greater than or equal to the threshold mₜₕ, the Pauli operator decomposition method is executed. Accordingly, in the case where the Hamiltonian operator approximation method is not suitable for the quantum computer 200 being used, the Pauli operator decomposition method may be used for measurement.

One aspect of the computer program, the information processing method, and the information processing apparatus according to the present disclosure has been described above based on the embodiments. However, these are merely examples, and the present disclosure is not limited to the above description.

In one aspect, it is possible to reduce the sampling cost in a quantum computing device.

In any of the above aspects, the various features may be implemented in hardware, or as software modules running on one or more processors/computers.

Aspects also provide a computer program or a computer program product comprising instructions which, when executed by a computer, cause the computer to carry out any of the methods/method steps described herein, and a (non-transitory) computer-readable medium comprising instructions which, when executed by a computer, cause the computer to carry out any of the methods/method steps described herein. A computer program embodying aspects may be stored on a (non-transitory) computer-readable medium, or it could, for example, be in the form of a signal such as a downloadable data signal provided from an Internet website, or it could be in any other form.

## Claims

1. A computer program that causes a computer to perform a process comprising:
acquiring a Hamiltonian operator; and
determining, for each of a plurality of time evolution operators, a number of sampling runs to be performed in a quantum computing device (15), based on weights of the plurality of time evolution operators, the Hamiltonian operator being approximated as a linear combination of the plurality of time evolution operators using a finite difference formula.

2. The computer program according to claim 1, wherein the process further includes causing the quantum computing device to perform sampling according to the number of sampling runs determined for each of the plurality of time evolution operators.

3. The computer program according to claim 1 or 2, wherein
the plurality of time evolution operators includes a first time evolution operator and a second time evolution operator having a larger weight than the first time evolution operator, and
the determining of the number of sampling runs includes determining a larger number of sampling runs for the second time evolution operator than for the first time evolution operator.

4. The computer program according to any preceding claim, wherein the determining of the number of sampling runs includes
determining a total number of sampling runs, and
setting a distribution of the number of sampling runs determined for each of the plurality of time evolution operators, the number of sampling runs being proportional to the total number of sampling runs and to a value obtained by dividing an absolute value of a weight of said each of the plurality of time evolution operators by a sum of absolute values of the weights of the plurality of time evolution operators.

5. The computer program according to claim 4, wherein the determining of the number of sampling runs includes determining a difference parameter of the finite difference formula and an order of the finite difference formula, based on a sum of
a statistical error that occurs under the distribution and is proportional to a reciprocal of the difference parameter, and
an approximation error of the finite difference formula that increases as the difference parameter increases or as the order decreases.

6. The computer program according to claim 5, wherein the determining of the number of sampling runs includes determining the number of sampling runs for each of the plurality of time evolution operators using the weights obtained based on the determined order.

7. The computer program according to claim 5 or 6, wherein the process further includes
comparing the determined order with a predetermined threshold, and
causing, upon determining that the determined order is greater than or equal to the predetermined threshold, the quantum computing device to perform sampling of quantum circuits respectively corresponding to a plurality of Pauli operators, the Hamiltonian operator being expressed as a linear combination of the plurality of Pauli operators.

8. An information processing method executed by a computer, the information processing method comprising:
acquiring a Hamiltonian operator; and
determining, for each of a plurality of time evolution operators, a number of sampling runs to be performed in a quantum computing device (15), based on weights of the plurality of time evolution operators, the Hamiltonian operator being approximated as a linear combination of the plurality of time evolution operators using a finite difference formula.

9. An information processing apparatus comprising:
processing means (12) for
acquiring a Hamiltonian operator, and
determining, for each of a plurality of time evolution operators, a number of sampling runs to be performed in a quantum computing device (15), based on weights of the plurality of time evolution operators, the Hamiltonian operator being approximated as a linear combination of the plurality of time evolution operators using a finite difference formula.
